# EUROPÄISCHE PATENTSCHRIFT

(11) **EP 4 282 786 B1**
(45) Veröffentlichungstag und Bekanntmachung des Hinweises auf die Patenterteilung: **24.09.2025**
(21) Anmeldenummer: 23172299.2
(22) Anmeldetag: 09.05.2023
(51) Int. Cl.: B65G 1/04, B65G 1/137

(54) **FÖRDERVORRICHTUNG UND FÖRDERVERFAHREN FÜR WAREN**
CONVEYANCE DEVICE AND CONVEYANCE METHOD FOR GOODS
DISPOSITIF ET PROCÉDÉ DE TRANSPORT DE MARCHANDISES

(30) Priorität: 24.05.2022 DE 102022205209
(43) Veröffentlichungstag der Anmeldung: 29.11.2023
(73) Patentinhaber: Dürkopp Fördertechnik GmbH, 33719 Bielefeld (DE)
(72) Erfinder: Völker, Sigurd, 32602 Vlotho (DE); Sieksmeier, Dirk, 32139 Spenge (DE); Merten, Markus, 33605 Bielefeld (DE); Kleinekathöfer, Axel, 33649 Bielefeld (DE); Rehm, Pascal, 33617 Bielefeld (DE)
(74) Vertreter: Rau, Schneck & Hübner Patentanwälte Rechtsanwälte PartGmbB

(56) Entgegenhaltungen:
- CH-A1- 714 004
- DE-A1- 102020 214 613
- US-A1- 2014 303 770
- US-A1- 2019 016 539

## Beschreibung

Der Inhalt der deutschen Patentanmeldung DE 10 2022 205 209.9 wird durch Bezugnahme hierin aufgenommen.

Die Erfindung betrifft eine Fördervorrichtung und ein Förderverfahren für Waren.

CH 714 004 A1 offenbart eine Kommissionieranlage zum Kommissionieren von unterschiedlichen, insbesondere hängend transportierbaren, Waren sowie ein Verfahren zum Betrieb einer solchen Kommissionieranlage.

US 2019/016539 A1, die den Oberbegriff der Ansprüche 1 und 10 offenbart, offenbart ein Materialhandhabungssystem mit dynamischer Rückführungskapazität aufweisend einen umlaufenden Hochgeschwindigkeitssortierförderer.

In Förderanlagen werden Waren, insbesondere vereinzelt, aus einer oder mehreren Warenquellen zu einer oder mehreren Warensenken gefördert. Die Ware wird einer bestimmten Warensenke zugewiesen und von der Warenquelle aus dorthin gefördert. Wenn an der Warensenke ein Auftrag verarbeitet wird, muss dort eine Warenmenge, also eine Anzahl an Waren, vorübergehend bevorratet, also zwischengepuffert werden. Der Größenbedarf für den Warenspeicher an der Warensenke steigt proportional mit der Transportzeit von der Warenquelle zur Warensenke und mit der Warenverarbeitungsleistung an der Warensenke. Eine derartige Förderanlage weist einen großen Platzbedarf auf. Die Investitionskosten für eine derartige Förderanlage sind hoch.

Es ist die Aufgabe der vorliegenden Erfindung, die Förderung von Waren zu vereinfachen und den Platzbedarf, insbesondere im Bereich von Warensenken, zu reduzieren.

Diese Aufgabe ist erfindungsgemäß gelöst durch eine Fördervorrichtung mit den im Anspruch 1 angegebenen Merkmalen sowie durch ein Förderverfahren mit den im Anspruch 10 angegebenen Merkmalen.

Der Kern der Erfindung besteht darin, dass in einer Fördervorrichtung mindestens eine Warenquelle mittels eines Umlaufförderers mit mehreren Warensenken fördertechnisch verbunden ist, wobei der Umlaufförderer endlos umlaufend, also fördertechnisch geschlossen, ausgeführt ist. Es wurde erkannt, dass es vorteilhaft ist, wenn der Umlaufförderer einen ersten Förderstrang und einen zweiten Förderstrang aufweist, wobei nur der erste Förderstrang eine feste Förderbehältnis-Mitnahme aufweist. Der zweite Förderstrang weist keine feste Förderbehältnis-Mitnahme auf. Der zweite Förderstrang hat eine Pufferfunktion. Der zweite Förderstrang dient insbesondere zur Rezirkulation der Waren und insbesondere als Bypass-Strecke in dem Umlaufförderer bezüglich des ersten Förderstrangs. Insbesondere wird der geschlossene Umlaufförderer durch den ersten Förderstrang und den zweiten Förderstrang gebildet. In diesem Fall weist der Umlaufförderer keine weiteren Förderstränge auf.

Es ist auch möglich, dass der Umlaufförderer mehr als zwei Förderstränge aufweist, wobei mehrere erste Förderstränge, also mit fester Förderbehältnis-Mitnahme und/oder mehrere zweite Förderstränge ohne feste Förderbehältnis-Mitnahme vorhanden sein können. Wesentlich ist, dass nur die ersten Förderstränge mit der festen Förderbehältnis-Mitnahme ausgeführt sind. Entsprechend können aber auch mehr als ein Förderstrang, nämlich mehrere erste Förderstränge, jeweils eine feste Förderbehältnis-Mitnahme aufweisen.

Es wurde gefunden, dass mit dem Umlaufförderer und insbesondere mit dem zweiten Förderstrang ohne feste Förderbehältnis-Mitnahme eine Entkopplung der Förderbehältnisse und der Förderbehältnis-Mitnahme ermöglicht ist. Dadurch ist es insbesondere ermöglicht, die Förderbehältnisse in den Warenstrom des Umlaufförderers mit einstellbarem Abstand einzutakten, also fördertechnisch in den Umlaufförderer aufzugeben. Lücken im, insbesondere rückgeführten, Warenstrom, die insbesondere durch das Abgeben von Waren an den Warensenken entstehen, können durch das zumindest vorübergehende Aufstauen der Waren im zweiten Förderstrang und/oder durch das gezielte Eintakten der Waren von der mindestens einen Warenquelle geschlossen werden. Erfindungsgemäß gelingt es, den Warenstrom nachzuverdichten.

Eine Erkenntnis der Erfindung beruht darauf, dass das Förderbehältnis und ein die Förderbehältnisse antreibender Förderantrieb in dem Umlaufförderer zumindest abschnittsweise und/oder zumindest zeitweise entkoppelbar sind, also nicht fest miteinander verbunden sind. Diese Entkopplung erfolgt entlang des zweiten Förderstrangs.

Der Umlaufförderer selbst weist eine Pufferfunktion auf und ermöglicht insbesondere eine flexible Zuordnung der Waren im Umlaufförderer an die Warensenken. Da der Umlaufförderer an mehrere Warensenken unmittelbar angeschlossen ist, ist eine starre Warenzuordnung an genau eine Warensenke entbehrlich. Das Verfahren ist flexibel durchführbar.

Das erfindungsgemäße Verfahren eignet sich insbesondere für eine auftragslose Mengenverteilung und/oder eine auftragsgebundene Verteilung, die beispielsweise bei E-Commerce-Aufträgen genutzt wird. Bei der auftragsgebundenen Verteilung wird anstelle von Einzelwaren eine einen Auftrag bildende Warenmenge einer Warensenke zugeordnet. Ein Auftrag umfasst mindestens eine Ware und insbesondere mehrere Waren, wobei es sich insbesondere um verschiedene Waren, also um unterschiedliche Warentypen, handelt. Insbesondere weisen die Warensenken jeweils mehrere Warenplätze auf. Jeder Warenplatz bildet einen Puffer für mindestens eine Auftragsware.

Die in den Förderbehältnissen geförderten Waren sind eindeutig identifizierbar. Dazu weisen die Förderbehältnisse an sich bekannte Identifikationsmittel, insbesondere RFID-Chips und/oder maschinenlesbare Codes, insbesondere Strichcodes oder QR-Codes auf. Entlang einer Warenförderrichtung der Fördervorrichtung sind Lesegeräte angeordnet, die zum Lesen der Identifikationsmittel dienen. Die Förderbehältnisse mit den darin geförderten Waren sind in der Fördervorrichtung nachverfolgbar. Insbesondere kann die Position für jedes Förderbehältnis innerhalb der Fördervorrichtung bestimmt werden.

Insbesondere wird mit jedem Förderbehältnis genau eine Ware gefördert. Ein Förderbehältnis ist insbesondere eine Fördertasche, die insbesondere hängend in der Fördervorrichtung transportiert wird. Die Fördervorrichtung ist insbesondere ein Hängeförderer. Eine derartige Fördertasche ist beispielsweise bekannt aus DE 10 2018 201 675 A1 oder aus DE 10 2018 201 676 A1. Alternativ kann das Förderbehältnis auch ein Liegewarenbehälter sein, insbesondere eine Kiste oder ein Karton. In diesem Fall ist die Fördervorrichtung ein Liegeförderer, insbesondere ein Gurtförderer oder Bandförderer.

Die Warenquelle ist insbesondere ein Warenlager, eine Sortiereinheit, insbesondere ein Matrixsorter, oder ein Umlaufspeicher. Aus der Warenquelle können Waren, die für die Abarbeitung von Aufträgen erforderlich sind, gezielt und vereinzelt ausgelagert werden.

Die Fördervorrichtung kann klein bauend und insbesondere mit reduziertem Platzaufwand für einen Pufferspeicher ausgeführt werden. Ein entsprechendes Förderverfahren kann mit reduzierter Förderdauer und damit effizienter durchgeführt werden. Die Fördervorrichtung das Förderverfahren sind ökonomisch vorteilhaft und effizient. Insbesondere wurde gefunden, dass die Anzahl der Förderbehältnisse, die für die Abarbeitung von Aufträgen an den Warenplätzen der Warensenken bereitgestellt werden, reduziert werden kann, insbesondere auf etwa 10% der Anzahl der Förderbehältnisse gemäß einer Anlage aus dem Stand der Technik, also insbesondere eine Fördervorrichtung ohne erfindungsgemäßen Umlaufförderer.

Eine Fördervorrichtung, bei der der erste Förderstrang an die mindestens eine Warenquelle und die Warensenken unmittelbar angeschlossen ist, ermöglicht eine zielgerichtete und unmittelbare Warenförderung von der Warenquelle zu den Warensenken.

Eine Fördervorrichtung, bei dem der Umlaufförderer, insbesondere der erste Förderstrang, als vertikal oberhalb der Warensenken verlaufender Hängeförderer ausgeführt ist, vereinfacht die automatische Warenabgabe, insbesondere durch automatisiertes Entladen der Fördertaschen. Besonders vorteilhaft ist es, wenn die Fördertaschen automatisiert derart geöffnet werden können, dass die Waren selbsttätig aus den Fördertaschen herausfallen. Alternativ ist es möglich, die Fördertaschen insbesondere um eine Horizontalachse derart zu schwenken, dass die Waren herausfallen oder herausgleiten. Die Waren können aus den Warentaschen schwerkraftbedingt in die darunter angeordneten Warensenken direkt abgegeben werden. Ein manuelles Eingreifen ist entbehrlich.

Wenn alternativ an den Warensenken eine Ausschleuseeinheit angeordnet ist, ist es vorteilhaft, wenn die Förderbehältnisse in horizontaler Richtung beabstandet zu den Warensenken geführt werden. Insbesondere sind der erste Förderstrang und/oder die Ausschleuseeinheit vertikal derart zueinander angeordnet, dass die Fördertaschen sich im Wesentlichen auf dem gleichen Höhenniveau befinden wie die Warensenken. Das, insbesondere manuelle, Entladen der Fördertaschen an den Warensenken ist ergonomisch vorteilhaft. Alternativ können an der Ausschleuseeinheit zusätzliche Förderer, insbesondere Vertikal-Förderer, vorhanden sein, die einen Unterschied des Höhenniveaus der Fördertaschen bezüglich der Warensenken ausgleichen können.

Eine Fördervorrichtung gemäß Anspruch 2 ermöglicht eine unkomplizierte Förderbehältnis-Mitnahme. Die Förderbehältnis-Mitnahme ist insbesondere durch eine an sich bekannte Förderschiene und eine darin laufende Antriebskette ausgeführt, die mit Mitnehmern zusammenwirkt. Die Mitnehmer sind insbesondere als sogenannte Rolladapter ausgeführt, die in der Förderschiene geführt förderbar sind. Bezüglich der Ausgestaltung und der Funktion derartiger Rolladapter wird ausdrücklich auf die DE 10 2005 006 455 A1 verwiesen. Die Rolladapter ermöglichen eine Koppelbarkeit des Förderbehältnisses mit dem Förderantriebsmittel, also der Antriebskette.

Alternativ kann der Förderstrang als Bandförderer oder Gurtförderer ausgeführt sein, der mittels eines an sich bekannten Förderantriebsmittels angetrieben wird. Auf dem Bandförderer oder Gurtförderer werden Liegeförderbehälter transportiert.

Eine Fördervorrichtung gemäß Anspruch 3 ermöglicht eine flexible und unabhängige Bereitstellung der Waren von der Warenquelle. Dadurch, dass verschiedene Typen von Warenquellen an den Umlaufförderer koppelbar sind, ist die Gestaltungsfreiheit für die Fördervorrichtung erweitert.

Eine Fördervorrichtung gemäß Anspruch 4 eignet sich insbesondere für den Versandhandel. An den Warensenken werden die Waren abgegeben. Die Waren werden insbesondere aus dem Umlaufförderer abgegeben. An Packplätzen werden die Waren eines Auftrags gepackt, insbesondere in einen Versandbehälter geladen und der Versandbehälter geschlossen. Ein Versandbehälter kann eine Kiste, ein Karton oder eine Tüte sein. An den Packplätzen werden die Waren eines Auftrags für den Versand vorbereitet und insbesondere an einen Warenausgang der Fördervorrichtung als fertig gepackter Auftrag weitergefördert.

Eine Fördervorrichtung gemäß Anspruch 5 vereinfacht die Abgabe von Waren an den Warensenken. Mit einer Entladeeinheit können die Förderbehältnisse, insbesondere automatisch, entladen werden. Beispielsweise ist ein Öffnungsmechanismus vorgesehen, der ein automatisiertes Öffnen von Fördertaschen ermöglicht, so dass die darin geförderte Ware nach unten aus dem Förderbehältnis, insbesondere schwerkraftbedingt, herausfallen kann.

Zusätzlich oder alternativ kann die Warensenke eine Ausschleuseeinheit aufweisen, um Förderbehältnisse aus dem Umlaufförderer auszuschleusen. Die ausgeschleusten Förderbehältnisse können dann, insbesondere manuell, entladen werden. Eine Ausschleuseeinheit ist insbesondere dann vorteilhaft, wenn das Förderbehältnis nicht automatisch entladbar ist. Beispielsweise kann das Förderbehältnis eine Fördertasche, die nicht automatisiert öffenbar ist oder nicht automatisiert geöffnet werden soll, oder ein Kleiderbügel sein, der von dem Rolladapter hängend transportiert wird und an dem ein Kleidungsstück aufgehängt ist.

Eine Fördervorrichtung gemäß Anspruch 6 ermöglicht das Abführen entladener Förderbehältnisse aus dem Umlaufförderer. Eine Abführstrecke ist insbesondere an den ersten Förderstrang und insbesondere in Warenförderrichtung zwischen den Warensenken, insbesondere der letzten Warensenke, und dem zweiten Förderstrang ausgeführt. Es ist auch denkbar, dass der Umlaufförderer mehrere Abführstrecken aufweist, die jeweils an eine Ausschleuseeinheit angeschlossen sind. Es ist auch denkbar, dass mehrere Ausschleuseeinheiten in eine Abführstrecke münden.

Eine Fördervorrichtung gemäß Anspruch 7 ermöglicht eine effiziente Warenförderung. Insbesondere ist die Förderrate erhöht. Es wurde erkannt, dass die Förderrate des ersten Förderstrangs für die Förderrate der Fördervorrichtung insgesamt maßgeblich ist.

Eine Fördervorrichtung gemäß Anspruch 8 vereinfacht die Zwischenspeicherung der Waren im zweiten Förderstrang. Dabei kann der zweite Förderstrang besonders vorteilhaft und unkompliziert als Schwerkraftförderer ausgeführt sein. Als Schwerkraftförderer ist der zweite Förderstrang gegenüber der horizontalen mit einem Neigungswinkel angeordnet, wobei die Neigung der umlaufenden Warenförderrichtung entspricht. Der Neigungswinkel beträgt insbesondere höchstens 15°, insbesondere höchstens 10°, insbesondere höchstens 8°, insbesondere höchstens 5°, insbesondere höchstens 3° und insbesondere mindestens 1°. Mit dem Schwerkraftförderer werden die Waren selbsttätig entlang des zweiten Förderstrangs schwerkraftbedingt gefördert. Zusätzlich oder alternativ zu der Schwerkraftförderung kann an dem zweiten Förderstrang ein separater Förderantrieb zur maschinell unterstützten Förderung vorhanden sein.

Wenn die Fördervorrichtung ein Hängeförderer ist, kann die Staustrecke insbesondere auch als Power-and-Free-Förderer ausgeführt sein, also insbesondere als Zweischienensystem mit einer oberen Schiene, in der eine Antriebskette läuft, und einer unteren Schiene, in der die Mitnehmer, also Rolladapter, laufen. Die Rolladapter sind in diesem Fall formschlüssig an die Antriebskette gekuppelt und können beliebig ausgeklinkt werden, so dass die Antriebskette kontinuierlich umlaufen kann und die einzelnen Rolladapter dennoch angehalten und/oder ausgeschleust werden können. Ein derartiger Förderer wird auch als Schleppkreisförderer bezeichnet.

Wenn die Fördervorrichtung ein Liegeförderer ist, kann der zweite Förderstrang insbesondere als nach unten geneigte Rampe und/oder Rollbahn ausgeführt sein. Zusätzlich oder alternativ kann ein angetriebenes Förderband vorhanden sein.

Fördertaschen gemäß Anspruch 9 vereinfachen die Warenförderung und insbesondere den automatisierten Betrieb der Fördervorrichtung.

Ein Förderverfahren gemäß Anspruch 10 weist im Wesentlichen die Vorteile auf, die sich beim Betrieb der Fördervorrichtung des Anspruchs 1 ergeben. Erfindungsgemäß wurde erkannt, dass durch die flexible Zuordnung der Waren zu den Warensenken und durch die unmittelbare Bedienung der Warensenken mit Waren aus dem Umlaufförderer die Speicherkapazität an den Warensenken reduziert werden kann. Der Flächenbedarf und die Anlageninvestitionen für die Fördervorrichtung sind reduziert.

Ein Verfahren gemäß Anspruch 11 ermöglicht ein Konsolidieren des Warenstroms. In dem zweiten Förderstrang können die Waren, die nicht aus dem Umlaufförderer abgegeben worden sind und deshalb umlaufend gefördert werden, also einem weiteren Umlauf in den Umlaufförderer aufgegeben werden, zwischengespeichert und/oder nachverdichtet werden. Lücken im Warenstrom können dadurch effizient vermieden werden.

Ein Förderverfahren gemäß Anspruch 12 gewährleistet das Rückführen der Waren. Als vorteilhaft hat sich herausgestellt, wenn die rückgeführten Waren aus dem zweiten Förderstrang gegenüber neu einzuschleusenden Waren von der Warenquelle bevorzugt werden. Insbesondere ist dadurch gewährleistet, dass ein Volllaufen des zweiten Förderstrangs und damit ein unerwünschter Stau im zweiten Förderstrang und damit in dem Warenstrom im Umlaufförderer insgesamt vermieden werden kann.

Ein Verfahren gemäß Anspruch 13 erhöht insbesondere die Effizienz bei der Automatisierung. Insbesondere ist es möglich, die Abgabe der Waren, also das Entladen und/oder Ausschleusen bei konstanter Fördergeschwindigkeit durchzuführen. Es wurde erkannt, dass eine Reduktion der Fördergeschwindigkeit im Umlaufförderer entbehrlich ist. Das Abgeben der Waren erfolgt also insbesondere bei der Nenngeschwindigkeit des Förderantriebs. Das Verfahren ist insbesondere ein stetiges Förderverfahren. Das Verfahren ermöglicht eine erhöhte Effizienz, also eine erhöhte Förderrate.

Sowohl die in den Patentansprüchen angegebenen Merkmale als auch die in dem nachfolgenden Ausführungsbeispiel einer erfindungsgemäßen Fördervorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer erfindungsgemäßen Fördervorrichtung,
- Fig. 2: eine vergrößerte, teilweise freigeschnittene Seitenansicht eines ersten Förderstrangs eines Umlaufförderers für eine Fördervorrichtung gemäß Fig. 1 in Form eines Hängeförderers.

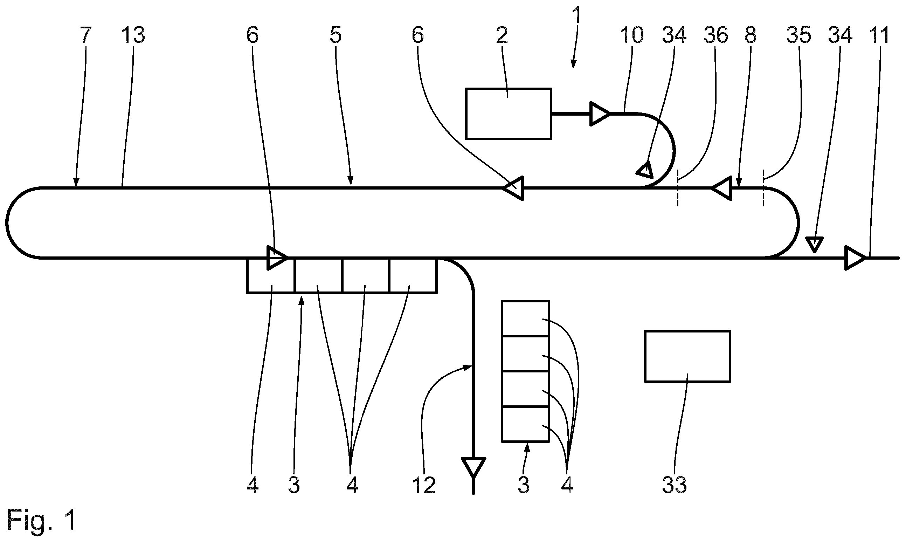

Eine in Fig. 1 rein schematisch dargestellte Fördervorrichtung 1 dient zum Fördern von Waren von mindestens einer Warenquelle 2 an mehrere Warensenken 3. Die Fördervorrichtung kann mehrere Warenquellen 2 umfassen, die insbesondere parallel zueinander angeordnet sind. Jede Warensenke 3 weist insbesondere mehrere Warenabgaben 4 auf, die insbesondere mechanisch voneinander getrennt sind, insbesondere in Form von Trennwänden. Die Warenabgaben 4 an einer Warensenke 3 können auch durch separate Einwurfschächte mit einer insbesondere nach oben geöffneten trichterförmigen Warenaufnahme ausgeführt sein.

Die Warensenken 3 sind insbesondere Packplätze, an welchen Waren eines Auftrags gepackt und insbesondere an einen Warenausgang der Fördervorrichtung 1 für den Versand abgegeben werden können.

Die Warenquelle 2 und die Warensenken 3 sind fördertechnisch mittels eines Umlaufförderers 5 fördertechnisch verbunden. Der Umlaufförderer 5 weist eine endlos umlaufende Förderstrecke auf und ermöglicht eine umlaufende Förderung entlang der Warenförderrichtung 6, die in Fig. 1 durch einen Pfeil symbolisiert ist und in Gegenuhrzeigerrichtung orientiert ist.

Der Umlaufförderer 5 weist einen ersten Förderstrang 7 und einen zweiten Förderstrang 8 auf. An der Warenquelle 2 werden die Waren jeweils in Förderbehältnissen bereitgestellt und mittels der Förderbehältnisse zu den Warensenken 3 gefördert. Die Warensenken 3 sind an die mindestens eine Warenquelle 2 über den ersten Förderstrang 7 insbesondere unmittelbar angeschlossen. Insbesondere ist in jedem Förderbehältnis genau eine Ware angeordnet.

Der erste Förderstrang 7 weist ein nicht näher dargestelltes Förderantriebsmittel auf, das eine feste Förderbehältnis-Mitnahme ermöglicht. Das Förderantriebsmittel umfasst insbesondere einen Antriebsmotor und eine damit mechanisch gekoppelte Antriebskette. Die Antriebskette ist insbesondere innerhalb einer Förderschiene 13 des ersten Förderstrangs 7, insbesondere innerhalb eines Führungsprofils, das insbesondere aus Kunststoff hergestellt ist, geführt angeordnet.

Der erste Förderstrang 7 und der zweite Förderstrang 8 sind an zwei Übergabestellen 35, 36 fördertechnisch miteinander gekoppelt. Die erste Übergabestelle 35 ist in Warenförderrichtung 6 zwischen dem Ende des ersten Förderstrangs 7 und dem Anfang des zweiten Förderstrangs 8 angeordnet. An der ersten Übergabestelle 35 werden die Förderbehältnisse von der festen Förderbehältnis-Mitnahme in dem ersten Förderstrang 7 auf den zweiten Förderstrang 8 ohne feste Förderbehältnis-Mitnahme übergeben. An der zweiten Übergabestelle 36, die in Warenförderrichtung 6 zwischen dem Ende des zweiten Förderstrangs 8 und dem Anfang des ersten Förderstrangs 7 angeordnet ist, werden die Waren von dem zweiten Förderstrang 8 an die feste Förderbehältnis-Mitnahme im ersten Förderstrang 7 aufgegeben.

Die Warenquelle 2 ist über mindestens einen Zuführ-Förderstrang 10 an den Umlaufförderer 5 fördertechnisch angekoppelt, insbesondere stromabwärts des zweiten Förderstrangs 8 und insbesondere stromabwärts des Förderantriebsmittels.

Der zweite Förderstrang 8 ist insbesondere als Staustrecke und insbesondere als Schwerkraftförderer ausgeführt. Besonders unkompliziert ist die Ausführung als Schwerkraftförderer, der insbesondere gegenüber der horizontalen nach unten geneigt ist. Die Neigung ist insbesondere zu dem ersten Förderstrang 7, insbesondere zu dem Förderantriebsmittel, hin gerichtet. Der zweite Förderstrang 8 weist eine Pufferfunktion auf.

Die Fördervorrichtung 1 umfasst mehrere, insbesondere unterschiedlich ausgeführte, Warensenken 3. Die Warensenken 3 können auch identisch ausgeführt sein. Die Warensenken 3 sind entlang der Warenförderrichtung 6 beabstandet, also hintereinander, angeordnet. Eine erste, in Fig. 1 links dargestellte Warensenke 3 weist eine nicht näher dargestellte Entladeeinheit auf, die ein, insbesondere automatisches, Entladen der Waren aus den Förderbehältnissen ermöglicht. Die erste Warensenke 3 und insbesondere die Abgabefächer 4, sind räumlich benachbart zu dem ersten Förderstrang 7 angeordnet. Die automatische Entladeeinheit kann beispielsweise ein automatisches Öffnen oder Kippen von Fördertaschen und/oder ein automatisches Schwenken oder Kippen von Liegeförderer-Behältern ermöglichen, wobei die Abgabefächer der ersten Warensenken 3 in Abgaberichtung der Waren angeordnet sind. Die erste Warensenke 3 ist also unmittelbar benachbart zu dem ersten Förderstrang 7 angeordnet.

Stromabwärts der Warensenken 3 ist an den Umlaufförderer 5 eine Abführstrecke 11 angeschlossen. Die Abführstrecke 11 dient zum Abführen, insbesondere automatisch, entleerter Förderbehältnisse aus dem Umlaufförderer 5. Die Abführstrecke 11 führt insbesondere zu einer nicht dargestellten Beladestation, an der die Förderbehältnisse mit Waren beladen werden können. Die Abführstrecke 11 kann insbesondere auch mit einem Pufferspeicher verbunden sein, um leere Förderbehältnisse zwischenzuspeichern.

Die Abführstrecke 11 kann entfallen, insbesondere wenn ein automatisches Entleeren der Förderbehältnisse mittels einer Entladeeinheit nicht erfolgt.

Eine in Fig. 1 rechts dargestellte zweite Warensenke 3 ist mittels einer Ausschleuseeinheit 12 an den Umlaufförderer 5, insbesondere an den ersten Förderstrang 7, angeschlossen. Die zweite Warensenke 3 kann räumlich beabstandet zu dem ersten Förderstrang 7 angeordnet sein, wobei eine fördertechnische Verbindung zu dem ersten Förderstrang 7 mittels der Ausschleuseeinheit 12 gewährleistet ist. Die Ausschleuseeinheit 12 ist insbesondere identisch zu der Abführstrecke 11 ausgeführt. Die Ausschleuseeinheit 12 ermöglicht ein gezieltes Ausschleusen von Förderbehältnissen aus dem Umlaufförderer 5 in die Ausschleuseeinheit 12. Im Bereich der zweiten Warensenke 3 werden die Förderbehältnisse mittels eines nicht näher dargestellten Stoppers gestoppt und anschließend insbesondere manuell entladen. Es ist denkbar, dass die Ausschleuseeinheit 12 analog der Abführstrecke 11 zu einer Beladestation führt. Es ist auch denkbar, dass die Ausschleuseeinheit 12 mit der Abführstrecke 11 zusammengeführt oder die Ausschleuseeinheit 12 in die Abführstrecke 11 mündet. Insbesondere können mehrere Ausschleuseeinheiten 12 an den Umlaufförderer angeschlossen sein. Vorteilhaft ist es, wenn für jede zweite Warensenke 3 entweder eine Ausschleuseeinheit 12 oder eine Entladeeinheit vorgesehen ist.

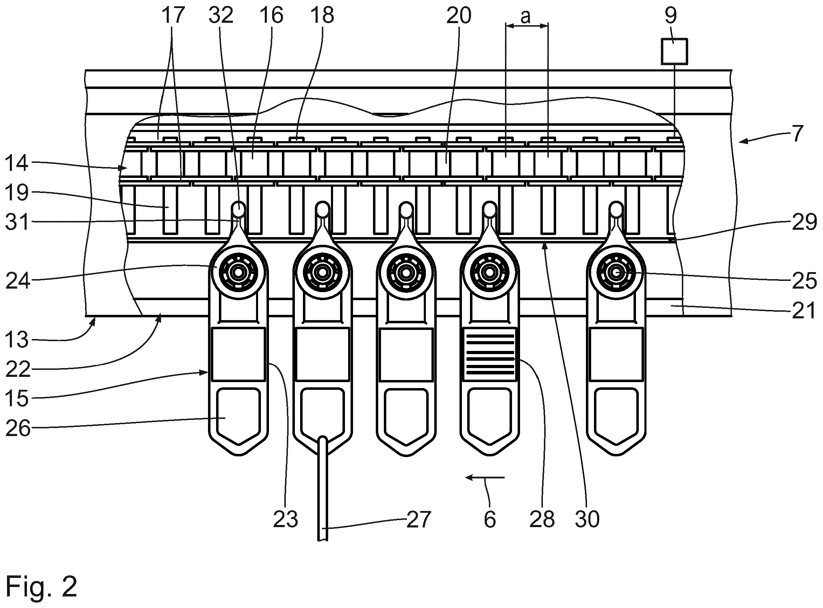

Im Folgenden wird unter Bezugnahme auf Fig. 2 der erste Förderstrang 7 näher erläutert.

Der erste Förderstrang 7 ist als Förderschiene 13 ausgeführt, die auch als Transportschiene bezeichnet wird. Entsprechend ist die Fördervorrichtung 1 ein Hängeförderer. Die Transportschiene 13 ist mittels geeigneter Trageinrichtungen in einem Raum verlegbar. Die Transportschiene 13 ist als Hohlkasten-Profil ausgebildet, in dem eine Antriebskette 14 angeordnet ist und mittels des in Fig. 2 rein schematisch dargestellten Antriebs 9 in Warenförderrichtung 6 antreibbar ist.

Mittels der Antriebskette 14 sind Halteelemente 15 entlang der Transportschiene 13 bewegbar. Die Antriebskette 14 und der Antrieb 9 bilden ein Förderantriebsmittel für den ersten Förderstrang 7. Der Antrieb 9 ist insbesondere ein elektromotorischer Antrieb, der mittels eines Kraftübertragungselements, insbesondere eines Antriebs-Zahnrades, mechanisch mit der Antriebskette 14, also zur Kraftübertragung, gekoppelt ist.

Die Antriebskette 14 ist eine sogenannte Rollen-Kette mit Rollen 16, die in geringem Abstand voneinander mittels Verbindungslaschen 17 miteinander verbunden sind. Bolzen 18 weisen nach unten vorstehende, als Mitnehmer 19 dienende bolzenförmige Verlängerungen auf. Die Bolzen 18 mit den Mitnehmern 19 verlaufen normal zur Transportschiene 13 in einer durch die Warenförderrichtung 6 aufgespannten Vertikalebene.

Die Antriebskette 14 ist in Richtung der Bolzen 18, also senkrecht und quer zur Warenförderrichtung 6 mittels die Verbindungslaschen 17 untergreifende Führungen 20 in der Transportschiene 13 geführt und gehalten.

Ein Mittenabstand a benachbarter Mitnehmer 19 in der Transportschiene 13 in Warenförderrichtung 6 entspricht exakt der Teilung der Antriebskette 14 und ist insoweit unveränderbar und konstant. Durch die Mitnehmer 19 wird die feste Förderbehältnis-Mitnahme definiert.

An einer Unterseite der Transportschiene 13 sind zwei aufeinander zugerichtete Führungsstege 21 ausgebildet, zwischen denen sich ein in Längsrichtung der Transportschiene 13, also in Warenförderrichtung 6 erstreckender Schlitz 22 ausgebildet ist bzw. begrenzt wird. Durch diesen Schlitz 22 ragt ein flaches Tragteil 23 jedes Halteelements 15 nach unten aus der Transportschiene 13 heraus. In seinem oberen Bereich weist das Halteelement 15 beiderseits des Tragteils 23 je eine Laufrolle 24 auf, die sich jeweils auf einem der beiden Führungsstege 21 abstützt und hierauf in Warenförderrichtung 6 verschiebbar ist. Es ist also nur ein Paar von Laufrollen 24 vorhanden, die um eine gemeinsame Achse 25 drehbar sind, so dass das gesamte Halteelement 15 in der Transportschiene 13 um die Achse 25 pendeln kann.

Das Tragteil 23 weist an seinem unteren Ende eine Aufnahmeöffnung 26 auf, in die ein Förderbehältnis in Form einer Fördertasche 27 einhängbar ist. Die Fördertasche 27 ist in Fig. 2 rein schematisch dargestellt. Das Halteelement 15, das mittels der Laufrollen 24 in der Transportschiene 13 rollen gefördert wird und das mittels der Aufnahmeöffnung 26 zur Aufnahme der Fördertasche 27 geeignet ist, wird auch als Rolladapter bezeichnet.

Das Halteelement 15 weist ein Identifizierungselement 28 auf, das als Transponder, insbesondere RFID-Chip, oder als maschinenlesbarer Code, insbesondere Barcode oder QR-Code, ausgeführt ist. Das Identifizierungselement 28 ist insbesondere zwischen der Aufnahmeöffnung 26 und der Unterseite der Transportschiene 13 angeordnet und damit für ein Lesegerät, insbesondere automatisiert, lesbar. Das Identifizierungselement 28 verläuft entsprechend der Anordnung des plattenartigen Tragteils 23 in Warenförderrichtung 6, liegt also mit seiner Hauptfläche offen quer zur Warenförderrichtung 6, also zur Seite hin.

Die Fördertasche 27 mit einer zu fördernden Ware bleibt nach dem mechanischen Koppeln in das Halteelement 15 während des gesamten Fördervorgangs an diesem Halteelement 15, ist mit diesem also gleichsam "verheiratet". Die zu fördernde Ware wird also gleichsam über das Identifizierungselement 28 und damit das Halteelement 15 gesteuert. Da wiederum der gesamte Transport von der Antriebskette her erfolgt, ist es sehr wichtig, dass ein Halteelement 15 während des Transports eine absolut eindeutige Position relativ zu der Antriebskette 14 einnimmt.

Die Transportschiene 13 weist unmittelbar oberhalb der Laufrollen 24 aufeinander zugerichtete horizontale Begrenzungsstege 29 auf, die zwischen sich einen Schlitz 30 begrenzen. Durch diesen Schlitz 30 erstreckt sich ein stilartiger Ansatz 31 des Halteelements 15, der einstückig mit dem Tragteil 23 an dessen oberen Ende ausgebildet ist.

Am oberen Ende des stielartigen Ansatzes 31 ist ein Anschlag 32 nach Art eines Querriegels ausgebildet ist, dessen Erstreckung horizontal quer zur Warenförderrichtung 6 größer ist als die Breite des Schlitzes 30, so dass bei einem Neigen des Halteelements 15 gegenüber der Transportschiene 13, dieser Anschlag 32 zur Anlage auf den Begrenzungsstegen 29 kommt und somit eine weitere Neigung des Halteelements 15 verhindert. Der Ansatz 31 und der Anschlag 32 haben die Grundform eines Hammers, sind also T-förmig ausgeführt.

Die Mitnehmer 19 der Antriebskette 14 erstrecken sich bis unmittelbar oberhalb der Begrenzungsstege 29, so dass ein zwischen zwei Mitnehmern 19 befindliches Halteelement 15 immer zuverlässig mitgenommen wird, also nicht außer Eingriff mit dem Mitnehmer 19 kommt.

Die Fördervorrichtung 1 weist eine Steuerungseinheit 33 auf, die insbesondere mit der mindestens einen Warenquelle 2, den Warensenken 3, dem Umlaufförderer 5 und/oder den Fördersträngen 7 und 8 in Signalverbindung steht. Die Signalverbindung kann kabelgebunden oder kabellos erfolgen. Insbesondere steht die Steuerungseinheit 33 mit dem Förderantriebsmittel in Signalverbindung, um ein gezieltes Einschleusen der Fördertaschen 27 von der mindestens einen Warenquelle 2 bzw. ein Rückführen der Fördertaschen 27 aus dem zweiten Förderstrang 8 zu ermöglichen.

Die Fördervorrichtung 1 weist mehrere Leseeinheiten 34 auf, die insbesondere am Eingang des Umlaufförderers 5 angeordnet sind, also dort, wo der Zuführförderstrang 10 in den Umlaufförderer 5 mündet. Eine weitere Leseeinheit 34 kann insbesondere am Ausgang des Umlaufförderers 5 angeordnet sein, also dort, wo die Abführstrecke 11 aus dem Umlaufförderer 5 mündet. Die Leseeinheiten 34 dienen zum Lesen der Identifizierungselemente 28, so dass unmittelbare Rückschlüsse über die jeweilige Position der Fördertaschen 27 in der Fördervorrichtung 1 und insbesondere innerhalb des Umlaufförderers 5 möglich sind.

Insbesondere steht die Steuerungseinheit 33 mit der Entladeeinheit und/oder mit der Ausschleuseeinheit 12 in Signalverbindung, um ein automatisches Entladen und/oder Ausschleusen der Fördertaschen 27 zu gewährleisten.

Nachfolgend wird ein Förderverfahren für Waren in der Fördervorrichtung 1 näher erläutert.

Verschiedene Waren werden an der mindestens einen Warenquelle 2 bereitgestellt. Dazu sind die Waren jeweils einzeln in einer Fördertasche 27 angeordnet. Die Waren werden in den Fördertaschen 27 über den Zuführstrang 10, den Umlaufförderer 5 zugeführt und insbesondere an den ersten Förderstrang 7 des Umlaufförderers 5 übergeben und dort eingeschleust. Da der erste Förderstrang 7, wie in Fig. 2 dargestellt, mit fester Förderbehältnis-Mitnahme ausgeführt ist, werden die Fördertaschen 27 jeweils in einem Rolladapter 15 mitgenommen. Die jeweilige Position der Fördertaschen 27 ist mittels der Identifizierungselemente 28 eindeutig zuordenbar.

Die Waren werden in dem Umlaufförderer 5 endlos umlaufend gefördert, also kreisen entlang der Warenförderrichtung 6. Wenn an einer der Warensenken 3 ein Auftrag mit mindestens einer Ware abgearbeitet werden soll, wird ein hierfür erforderlicher Bedarf an Waren über die Steuerungseinheit 33 angemeldet. Mittels der Steuerungseinheit 33 werden der entsprechenden Warensenke 3 die erforderlichen Waren zugeordnet und dorthin gefördert. Dadurch, dass der hierfür verwendete Förderer ein Umlaufförderer 5 ist, können mehrere Warensenken 3 an die Warenquelle 2 fördertechnisch angebunden werden. Wesentlich ist also, dass die Zuweisung der Waren zu den Warensenken nicht bereits an oder in der Warenquelle 2 erfolgt, sondern flexibel aus dem Umlaufförderer 5 heraus erfolgen kann. Insbesondere dient der Umlaufförderer als Warenpuffer, in dem die Waren so lange kreisen, also umlaufend gefördert werden, bis an einer oder mehreren Warensenken 3 ein entsprechender Warenbedarf angemeldet wird. Besonders vorteilhaft ist, dass der Umlaufförderer 5 insbesondere von allen Senken genutzt werden kann, wodurch die Flexibilität bei der Förderung der Waren und der Zuweisung der Waren erhöht ist.

Die Abgabe der Waren an der jeweiligen Warensenke erfolgt insbesondere mittels einer automatischen Entladung oder einem Ausschleusen der Fördertaschen 27 in eine Ausschleuseeinheit 12. Entladene Fördertaschen 27 können aus dem Umlaufförderer 5 an der Ausschleusestrecke 11 ausgeschleust werden. Nicht ausgeschleuste Fördertaschen 27 werden in den zweiten Förderstrang 8 gefördert, verbleiben also im Umlaufförderer 5. In dem zweiten Förderstrang 8 können die nicht ausgeschleusten Fördertaschen 27 aufgestaut, also konsolidiert werden. Mögliche Lücken im Warenstrom werden dadurch geschlossen. Der zweite Förderstrang 8 ermöglicht ein Nachverdichten der Fördertaschen 27. Mit dem Förderantriebsmittel können die im zweiten Förderstrang 8 aufgestauten Fördertaschen 27 wieder an den ersten Förderstrang 7 mit der festen Förderbehältnis-Mitnahme aufgegeben werden. Der zweite Förderstrang 8 dient also zum Rückführen von Waren in den Warenstrom, die nicht abgegeben worden sind.

## Patentansprüche

1. Fördervorrichtung für Waren umfassend
a. mindestens eine Warenquelle (2), die die Waren mittels Förderbehältnissen (27) bereitstellt,
b. mehrere Warensenken (3), zu welchen die Waren gefördert werden,
**wobei** c. die Fördervorrichtung (1) einen die mindestens eine Warenquelle (2) und die Warensenken (3) fördertechnisch verbindenden Umlaufförderer (5) umfasst mit einem ersten Förderstrang (7) und einem sich dem ersten Förderstrang (7) entlang einer Warenförderrichtung (6) im Umlaufförderer (5) anschließenden zweiten Förderstrang (8), wobei nur der erste Förderstrang (7) eine feste Förderbehältnis-Mitnahme aufweist, wobei der Umlaufförderer (5) endlos umlaufend ausgeführt ist,
d. der erste Förderstrang (7) an die mindestens eine Warenquelle (2) und die Warensenken (3) unmittelbar angeschlossen ist
**dadurch gekennzeichnet, dass**
e. der Umlaufförderer (5) als Hängeförderer zum hängenden Fördern der Förderbehältnisse (27) ausgeführt ist, wobei der Hängeförderer vertikal oberhalb der Warensenken (3) verläuft.

2. Fördervorrichtung gemäß einem der vorstehenden Ansprüche,
**dadurch gekennzeichnet, dass** der erste Förderstrang (7) ein Förderantriebsmittel zur festen Förderbehältnis-Mitnahme aufweist, insbesondere eine in einer Förderschiene (13) laufende Antriebskette (14) und damit zusammenwirkende Halteelemente (15), die jeweils mit einem Förderbehältnis (27) koppelbar sind.

3. Fördervorrichtung gemäß einem der vorstehenden Ansprüche,
**dadurch gekennzeichnet, dass** die mindestens eine Warenquelle (2) ein Warenlager, eine Sortiereinheit, insbesondere ein Matrixsorter, oder ein Umlaufspeicher ist.

4. Fördervorrichtung gemäß einem der vorstehenden Ansprüche,
**dadurch gekennzeichnet, dass** die Warensenken (3) als Warenabgaben, insbesondere Packplätze, ausgeführt sind.

5. Fördervorrichtung gemäß einem der vorstehenden Ansprüche,
**dadurch gekennzeichnet, dass** die Warensenken (3) eine, insbesondere automatische, Entladeeinheit zum Entladen der Waren aus den Förderbehältnissen (27) und/oder eine Ausschleuseeinheit (12) zum Ausschleusen der Förderbehältnisse (27) aus dem Umlaufförderer (5) aufweist.

6. Fördervorrichtung gemäß einem der vorstehenden Ansprüche, **gekennzeichnet durch** eine an den Umlaufförderer (5) angeschlossene Abführstrecke (11) zum Abführen entladener Förderbehältnisse (27) aus dem, Umlaufförderer (5), wobei die Abführstrecke (11) insbesondere an den ersten Förderstrang (7) angeschlossen ist, insbesondere entlang der Warenförderrichtung (6) zwischen den Warensenken (3) und dem zweiten Förderstrang (8).

7. Fördervorrichtung gemäß einem der vorstehenden Ansprüche,
**dadurch gekennzeichnet, dass** der erste Förderstrang (7) eine erste Förderlänge (l_{F1}) und der zweite Förderstrang (8) eine zweite Förderlänge (l_{F2}) aufweisen, wobei gilt: l_{F1} > l_{F2}, insbesondere l_{F1} >5 · l_{F2}, insbesondere l_{F1} >10 · l_{F2}.

8. Fördervorrichtung gemäß einem der vorstehenden Ansprüche,
**dadurch gekennzeichnet, dass** der zweite Förderstrang (8) als Staustrecke, insbesondere als Schwerkraftförderer und insbesondere als eine gegenüber der Horizontalen nach unten geneigte Förderschiene (13) ausgeführt ist.

9. Fördervorrichtung gemäß einem der vorstehenden Ansprüche,
**dadurch gekennzeichnet, dass** die Förderbehältnisse jeweils als Fördertaschen (27) ausgebildet sind, die insbesondere jeweils einzeln und/oder automatisiert entladbar sind.

10. Förderverfahren für Waren umfassend die Verfahrensschritte
- Bereitstellen der Waren mittels Förderbehältnissen (27) an mindestens einer Warenquelle (2),
- Fördern der Waren entlang einer Warenförderrichtung (6) zu einer von mehreren Warensenken (3) mittels eines geschlossenen Umlaufförderers (5), der einen ersten Förderstrang (7) und einen sich dem ersten Förderstrang (7) in Warenförderrichtung (6) anschließenden zweiten Förderstrang (8) aufweist, wobei der Umlaufförderer (5) endlos umlaufend ausgeführt ist, wobei der erste Förderstrang (7) an die mindestens eine Warenquelle (2) und die Warensenken (3) unmittelbar angeschlossen ist, **dadurch gekennzeichnet, dass** der Umlaufförderer (5) als Hängeförderer zum hängenden Fördern der Förderbehältnisse (27) ausgeführt ist, wobei der Hängeförderer vertikal oberhalb der Warensenken (3) verläuft, wobei die Waren nur entlang des ersten Förderstrangs mit fester Förderbehältnis-Mitnahme gefördert werden.

11. Förderverfahren gemäß Anspruch 10, **dadurch gekennzeichnet, dass** die Waren in dem zweiten Förderstrang (8) aufgestaut werden.

12. Förderverfahren gemäß Anspruch 10 oder 11, **gekennzeichnet durch** ein Rückführen von Waren von dem zweiten Förderstrang (8) in den ersten Förderstrang (7), wobei insbesondere das Rückführen der Waren gegenüber einem Einschleusen der von der Warenquelle (2) bereitgestellten Waren bevorzugt erfolgt.

13. Förderverfahren gemäß einem der Ansprüche 10 bis 12, **dadurch gekennzeichnet, dass** an den Warensenken (3) ein, insbesondere automatisches, Entladen der Waren aus den Förderbehältnissen (27) mittels einer Entladeeinheit und/oder ein Ausschleusen von Förderbehältnissen (27) aus dem Umlaufförderer (5) mittels einer Ausschleuseeinheit (12) erfolgt.

## Claims

1. Conveying apparatus for goods comprising
a. at least one goods source (2) which provides the goods by means of conveyor containers (27),
b. a plurality of goods sinks (3) to which the goods are conveyed,
**wherein**
c. the conveying apparatus (1) comprises an endless conveyor (5) which connects the at least one goods source (2) and the goods sinks (3) in terms of conveying technology and has a first conveyor strand (7) and a second conveyor strand (8) which follows the first conveyor strand (7) along a goods conveying direction (6) in the endless conveyor (5), wherein only the first conveyor strand (7) has a fixed conveyor container entrainment, wherein the endless conveyor (5) is designed to circulate endlessly,
d. the first conveyor strand (7) is directly connected to the at least one product source (2) and the product sinks (3),
**characterized in that**
e. the endless conveyor (5) is designed as an overhead conveyor for the suspended conveyance of the conveyor containers (27), wherein the overhead conveyor runs vertically above the goods sinks (3).

2. Conveying apparatus according to any one of the preceding claims, **characterized in that** the first conveyor strand (7) has a conveyor drive means for fixed conveyor container entrainment, in particular a drive chain (14) running in a conveyor rail (13) and holding members (15) cooperating therewith, which can each be coupled to a conveyor container (27).

3. Conveying apparatus according to any one of the preceding claims, **characterized in that** the at least one goods source (2) is a warehouse, a sorting unit, in particular a matrix sorter, or a circulating storage unit.

4. Conveying apparatus according to any one of the preceding claims, **characterized in that** the goods sinks (3) are designed as goods dispatching points, in particular packing places.

5. Conveying apparatus according to any one of the preceding claims, **characterized in that** the goods sink (3) has an unloading unit, in particular an automatic unloading unit, for unloading the goods from the conveyor containers (27) and/or a discharge unit (12) for discharging the conveyor containers (27) from the endless conveyor (5).

6. Conveying apparatus according to any one of the preceding claims, **characterized by** a discharge line (11) connected to the endless conveyor (5) for discharging unloaded conveyor containers (27) from the endless conveyor (5), wherein the discharge line (11) is connected in particular to the first conveyor strand (7), in particular along the goods conveying direction (6) between the goods sinks (3) and the second conveyor strand (8).

7. Conveying apparatus according to any one of the preceding claims, **characterized in that** the first conveyor strand (7) has a first conveyor length (lᵣ₁) and the second conveyor strand (8) has a second conveyor length (l_{F2}), wherein: l_{F1} > l_{F2}, in particular l_{F1} >5 · l_{F2}, in particular l_{F1} >10 · l_{F2}.

8. Conveying apparatus according to any one of the preceding claims, **characterized in that** the second conveyor strand (8) is designed as an accumulation conveyor, in particular as a gravity conveyor and in particular as a conveyor rail (13) that is inclined downwards with respect to the horizontal.

9. Conveying apparatus according to one of the preceding claims, **characterized in that** the conveyor containers are each designed as conveyor bags (27), which in particular can each be unloaded individually and/or in an automated manner.

10. Conveying method for goods, comprising the method steps of
- providing the goods by means of conveyor containers (27) at at least one goods source (2),
- conveying the goods along a goods conveying direction (6) to one of a plurality of goods sinks (3) by means of a closed endless conveyor (5) which has a first conveyor strand (7) and a second conveyor strand (8) which follows the first conveyor strand (7) in the goods conveying direction (6), wherein the endless conveyor (5) is designed to circulate endlessly, wherein the first conveyor strand (7) is directly connected to the at least one goods source (2) and the goods sinks (3), **characterized in that**
the endless conveyor (5) is designed as an overhead conveyor for the suspended conveyance of the conveyor containers (27), wherein the overhead conveyor runs vertically above the goods sinks (3), wherein the goods are conveyed only along the first conveyor strand with fixed conveyor container engagement.

11. Conveying method according to claim 10, **characterized in that** the goods are accumulated in the second conveyor strand (8).

12. Conveying method according to claim 10 or 11, **characterized by** a return of goods from the second conveyor strand (8) into the first conveyor strand (7), wherein in particular the return of the goods is carried out in preference over an insertion of the goods provided by the goods source (2).

13. Conveying method according to any one of claims 10 to 12, **characterized in that** at the goods sinks (3), the goods are unloaded, in particular automatically, from the conveyor containers (27) by means of an unloading unit and/or the conveyor containers (27) are discharged from the endless conveyor (5) by means of a discharge unit (12).

## Revendications

1. Dispositif de transport pour des marchandises comprenant :
a. au moins une source de marchandises (2) qui fournit les marchandises au moyen de conteneurs de transport (27),
b. plusieurs récepteurs de marchandises (3) vers lesquels les marchandises sont transportées,
**dans lequel** c. le dispositif de transport (1) comprend un convoyeur en circulation (5) reliant en termes de transport la au moins une source de marchandises (2) et les récepteurs de marchandises (3), avec un premier tronçon de transport (7) et un second tronçon de transport (8) suivant le premier tronçon de transport (7) le long d'une direction de transport de marchandises (6) dans le convoyeur en circulation (5), seul le premier tronçon de transport (7) comportant un entraînement de conteneurs de transport fixe, le convoyeur en circulation (5) étant réalisé de façon à circuler en continue,
d. le premier tronçon de transport (7) est directement relié à la au moins une source de marchandises (2) et aux récepteurs de marchandises (3),
**caractérisé en ce que**
e. le convoyeur en circulation (5) est réalisé sous la forme d'un convoyeur aérien pour le transport suspendu des conteneurs de transport (27), le convoyeur aérien s'étendant verticalement au-dessus des récepteurs de marchandises (3).

2. Dispositif de transport selon l'une des revendications précédentes, **caractérisé en ce que** le premier tronçon de transport (7) comporte un moyen d'entraînement de convoyeur pour l'entraînement de conteneurs de transport fixe, en particulier une chaîne d'entraînement (14) s'étendant dans un rail de transport (13), et des éléments de retenue (15) coopérant avec celui-ci, qui peuvent être respectivement couplés à un conteneur de transport (27).

3. Dispositif de transport selon l'une des revendications précédentes, **caractérisé en ce que** la au moins une source de marchandises (2) est un entrepôt de marchandises, une unité de tri, en particulier une trieuse matricielle, ou un magasin en circulation.

4. Dispositif de transport selon l'une des revendications précédentes, **caractérisé en ce que** les récepteurs de marchandises (3) sont réalisés sous forme de points de distribution de marchandises, en particulier des postes d'emballage.

5. Dispositif de transport selon l'une des revendications précédentes, **caractérisé en ce que** les récepteurs de marchandises (3) comportent une unité de déchargement, en particulier automatique, pour décharger les marchandises des conteneurs de transport (27) et/ou une unité d'évacuation (12) pour évacuer les conteneurs de transport (27) du convoyeur en circulation (5).

6. Dispositif de transport selon l'une des revendications précédentes, **caractérisé par** un trajet d'évacuation (11) relié au convoyeur en circulation (5) pour évacuer des conteneurs de transport (27) déchargés du convoyeur en circulation (5), dans lequel le trajet d'évacuation (11) est en particulier relié au premier tronçon de transport (7), en particulier le long de la direction de transport de marchandises (6) entre les récepteurs de marchandises (3) et le second tronçon de transport (8).

7. Dispositif de transport selon l'une des revendications précédentes, **caractérisé en ce que** le premier tronçon de transport (7) a une première longueur de transport (l_{F1}) et le second tronçon de transport (8) a une seconde longueur de transport (l_{F2}), dans lequel :
l_{F1} > l_{F2}, en particulier l_{F1} >5 ▪ l_{F2}, en particulier l_{F1} >10 ▪ l_{F}.

8. Dispositif de transport selon l'une des revendications précédentes, **caractérisé en ce que** le second tronçon de transport (8) est réalisé sous la forme d'un tronçon d'accumulation, en particulier sous la forme d'un convoyeur par gravité et en particulier sous la forme d'un rail de transport (13) incliné vers le bas par rapport à l'horizontale.

9. Dispositif de transport selon l'une des revendications précédentes, **caractérisé en ce que** les conteneurs de transport sont respectivement réalisés sous la forme de poches de transport (27) qui peuvent en particulier être déchargées individuellement et/ou automatiquement.

10. Procédé de transport pour des marchandises, comprenant les étapes de procédé consistant à :
- fournir des marchandises au moyen de conteneurs de transport (27) à au moins une source de marchandises (2),
- transporter les marchandises le long d'une direction de transport de marchandises (6) jusqu'à l'un de plusieurs récepteurs de marchandises (3) au moyen d'un convoyeur en circulation fermé (5) qui comporte un premier tronçon de transport (7) et un second tronçon de transport (8) suivant le premier tronçon de transport (7) dans la direction de transport de marchandises (6), dans lequel le convoyeur en circulation (5) est réalisé de façon à circuler en continue, le premier tronçon de transport (7) étant directement relié à la au moins une source de marchandises (2) et aux récepteurs de marchandises (3),
**caractérisé en ce que**
le convoyeur en circulation (5) est réalisé sous la forme d'un convoyeur aérien pour le transport suspendu des conteneurs de transport (27), le convoyeur aérien s'étendant verticalement au-dessus des récepteurs de marchandises (3), les marchandises étant transportées uniquement le long du premier tronçon de transport avec l'entraînement de conteneurs de transport fixe.

11. Procédé de transport selon la revendication 10, **caractérisé en ce que** les marchandises sont accumulées dans le second tronçon de transport (8).

12. Procédé de transport selon la revendication 10 ou 11, **caractérisé par** un retour des marchandises provenant du second tronçon de transport (8) dans le premier tronçon de transport (7), dans lequel en particulier le retour des marchandises est effectué de manière privilégiée par rapport à une insertion des marchandises fournies par la source de marchandises (2).

13. Procédé de transport selon l'une des revendications 10 à 12, **caractérisé en ce qu'**un déchargement, en particulier automatique, des marchandises à partir des conteneurs de transport (27) est effectué au niveau des récepteurs de marchandises (3) au moyen d'une unité de déchargement et/ou une évacuation de conteneurs de transport (27) du convoyeur en circulation (5) est effectuée au moyen d'une unité d'évacuation (12).
